# FASCICULE DE BREVET EUROPEEN

(11) **EP 3 465 025 B1**
(45) Date de publication et mention de la délivrance du brevet: **01.12.2021**
(21) Numéro de dépôt: 17733508.0
(22) Date de dépôt: 06.06.2017
(51) Int. Cl.: F25B 13/00, B60H 1/00

(54) **CIRCUIT DE CLIMATISATION DE VÉHICULE AUTOMOBILE**
KLIMAANLAGENKREISLAUF EINES KRAFTFAHRZEUGS
MOTOR VEHICLE AIR-CONDITIONING CIRCUIT

(30) Priorité: 07.06.2016 FR 1655176
(43) Date de publication de la demande: 10.04.2019
(73) Titulaire: Valeo Systemes Thermiques, 78320 Le Mesnil Saint Denis (FR)
(72) Inventeur: YAHIA, Mohamed, 78322 Le Mesnil Saint-Denis Cedex (FR); CLEMARON, Laetitia, 78322 Le Mesnil Saint-Denis Cedex (FR)
(74) Mandataire: Valeo Systèmes Thermiques
(86) Numéro de dépôt international: PCT/FR2017/051416
(87) Numéro de publication internationale: WO 2017/212158

(56) Documents cités:
- EP-A1- 2 891 849
- DE-T5-112013 002 754
- US-A1- 2015 121 922

## Description

L'invention se rapporte au domaine des véhicules automobiles et plus particulièrement à un circuit de climatisation de véhicule automobile et son procédé de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Le circuit de climatisation peut être réversible, c'est à dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

On parle de pompe à chaleur directe lorsque le troisième échangeur de chaleur est alimenté directement par le fluide réfrigérant du circuit de climatisation. On parle de pompe à chaleur indirecte lorsque le troisième échangeur de chaleur est alimenté par un autre fluide caloporteur que le fluide réfrigérant. Le fluide réfrigérant transfert de l'énergie calorifique à un fluide caloporteur circulant dans une boucle de gestion thermique au moyen notamment d'un échangeur de chaleur bifluide.

Cependant, dans le cas d'une pompe à chaleur indirecte, lorsque la température extérieure est inférieure ou égale à -10°C et que la température du fluide caloporteur est élevée, la différence de température entre le fluide caloporteur et le fluide réfrigérant peut ne pas être suffisante pour que le fluide réfrigérant puisse se condenser au niveau de l'échangeur de chaleur bifluide. Ce problème de condensation au niveau de l'échangeur de chaleur bifluide nuit au bon fonctionnement de la pompe à chaleur et par conséquent nuit au confort thermique des occupants du véhicule automobile.

Un des buts de la présente invention est donc de remédier au moins partiellement aux inconvénients de l'art antérieur et de proposer un circuit de climatisation amélioré.

La présente invention concerne donc un circuit de climatisation réversible indirect pour véhicule automobile selon la revendication 1.

Une branche de contournement, permet d'éviter que le fluide réfrigérant de la première boucle de fluide réfrigérant et/ou le fluide caloporteur de la deuxième boucle de fluide caloporteur ne circule dans l'échangeur de chaleur bifluide. Cela a un intérêt particulier lorsque la température extérieure est très basse, par exemple de l'ordre de - 10°C et que le fluide caloporteur est à haute température. Dans ces conditions, l'échangeur de chaleur bifluide est contourné et il n'y a pas d'échange d'énergie calorifique entre la première boucle de fluide réfrigérant et la deuxième boucle de fluide caloporteur. Toute l'énergie calorifique du fluide réfrigérant puisée dans l'air extérieur au véhicule automobile peut être restituée directement au flux d'air intérieur en direction de l'habitacle du véhicule via un échangeur de chaleur dédié.

Selon un aspect de l'invention, une branche de contournement est disposée sur la première boucle de fluide réfrigérant.

Selon un autre aspect de l'invention, le circuit de climatisation réversible indirect comporte un dispositif de redirection du fluide réfrigérant vers l'échangeur de chaleur bifluide ou vers la branche de contournement.

Selon un autre aspect de l'invention, une branche de contournement est disposée sur la deuxième boucle de fluide caloporteur.

Selon un autre aspect de l'invention, le circuit de climatisation réversible indirect comporte un dispositif de redirection du fluide caloporteur vers l'échangeur de chaleur bifluide ou vers la branche de contournement.

Selon un autre aspect de l'invention, la branche de contournement de l'échangeur de chaleur bifluide relie un cinquième point de jonction et un sixième point de jonction, ledit cinquième point de jonction étant disposé en amont de l'échangeur de chaleur bifluide sur la première branche de raccordement et ledit sixième point de jonction étant disposé en aval de l'échangeur de chaleur bifluide sur la première branche de raccordement.

Selon un autre aspect de l'invention, la deuxième boucle de fluide caloporteur comporte dans le sens de circulation du fluide caloporteur :
∘ une pompe,
∘ l'échangeur de chaleur bifluide
∘ un troisième échangeur de chaleur disposé en aval de l'échangeur de chaleur bifluide, ledit troisième échangeur de chaleur étant destiné à être traversé par le flux d'air intérieur et étant disposé en aval du deuxième échangeur de chaleur dans ledit flux d'air intérieur.

Selon un autre aspect de l'invention, a branche de contournement de l'échangeur de chaleur bifluide relie un septième point de jonction et un huitième point de jonction, ledit septième point de jonction étant disposé en amont de l'échangeur de chaleur bifluide sur la deuxième boucle de fluide caloporteur et ledit huitième point de jonction étant disposé en aval de l'échangeur de chaleur bifluide sur la deuxième boucle de fluide caloporteur.

Selon un autre aspect de l'invention, la deuxième boucle de fluide caloporteur comporte un élément électrique chauffant du fluide caloporteur disposé, dans le sens de circulation du fluide caloporteur, en aval de l'échangeur de chaleur bifluide, entre ledit échangeur de chaleur bifluide et le troisième échangeur de chaleur.

Selon un autre aspect de l'invention, la première branche de raccordement comporte un deuxième dispositif de détente disposé en aval de l'échangeur de chaleur bifluide, dans le sens de circulation du fluide réfrigérant au sein de ladite première branche de raccordement.

Selon un autre aspect de l'invention, la première boucle de fluide réfrigérant comporte une branche de dérivation reliant un neuvième point de jonction, disposé entre le premier échangeur de chaleur et le premier dispositif de détente, et un dixième point de jonction disposé entre le deuxième échangeur de chaleur et le compresseur, ladite branche de dérivation comprenant un troisième dispositif de détente et un quatrième échangeur de chaleur disposé en aval dudit troisième dispositif de détente.

Selon un autre aspect de l'invention, la deuxième boucle de fluide caloporteur comporte un cinquième échangeur de chaleur connecté en parallèle à ladite deuxième boucle de fluide caloporteur.

La présente invention concerne également un procédé de fonctionnement du circuit de climatisation réversible indirect selon un mode de fonctionnement pompe à chaleur dans lequel le fluide réfrigérant et/ou le fluide caloporteur passe par la branche de contournement de façon à ne pas circuler dans l'échangeur de chaleur bifluide.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation réversible indirect selon un premier mode de réalisation,
- la figure 2 montre une représentation schématique d'un circuit de climatisation réversible indirect selon un deuxième mode de réalisation,
- la figure 3 montre le circuit de climatisation réversible indirect de la figure 1 selon un premier mode de fonctionnement,
- la figure 4 montre le circuit de climatisation réversible indirect de la figure 1 selon un deuxième mode de fonctionnement,
- la figure 5 montre le circuit de climatisation réversible indirect de la figure 1 selon un troisième mode de fonctionnement,
- la figure 6 montre le circuit de climatisation réversible indirect de la figure 2 selon le troisième mode de fonctionnement,
- la figure 7 montre une représentation schématique d'un circuit de climatisation réversible indirect selon une variante du premier mode de réalisation,
- la figure 8 montre une représentation schématique d'un circuit de climatisation réversible indirect selon une autre variante du premier mode de réalisation,
- la figure 9 montre le circuit de climatisation réversible indirect de la figure 8 selon une variante du troisième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

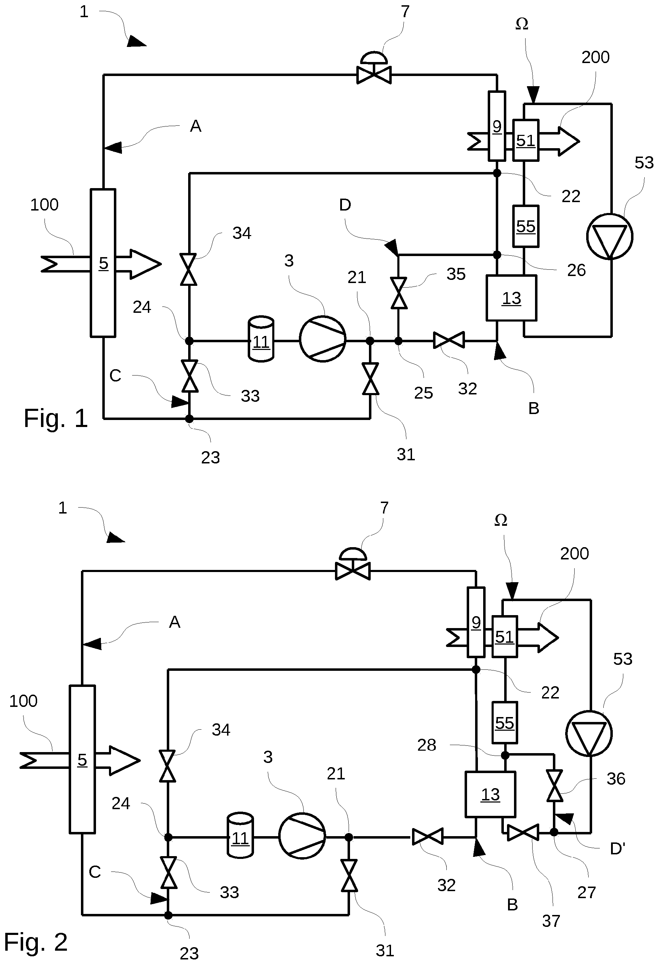

La figure 1 montre un circuit de climatisation réversible indirect 1 pour véhicule automobile. Ce circuit de climatisation réversible indirect 1 comporte notamment :
- une première boucle de fluide réfrigérant A, dans laquelle circule un fluide réfrigérant, notamment un fluide réfrigérant chimique, par exemple le R134a
- une deuxième boucle de fluide caloporteur Ω dans laquelle circule un fluide caloporteur, par exemple de l'eau ou de l'eau glycolée, et
- un échangeur de chaleur bifluide 13 agencé conjointement sur la première boucle de fluide réfrigérant A et la deuxième boucle de fluide caloporteur Ω, de façon à permettre les échanges de chaleur entre la première boucle de fluide réfrigérant A et la deuxième boucle de fluide caloporteur Ω.

Au moins une des première boucle de fluide réfrigérant A et deuxième boucle de fluide caloporteur Ω du circuit de climatisation réversible 1 comporte également une branche de contournement D, D' de l'échangeur de chaleur bifluide 13.

Cette branche de contournement D, D', permet d'éviter que le fluide réfrigérant de la première boucle de fluide réfrigérant A et/ou le fluide caloporteur de la deuxième boucle de fluide caloporteur Ω ne circule dans l'échangeur de chaleur bifluide 13. Cela a un intérêt particulier lorsque la température extérieure est très basse, par exemple de l'ordre de -10°C et que le fluide caloporteur est à haute température. Dans ces conditions, l'échangeur de chaleur bifluide 13 est contourné et il n'y a pas d'échange d'énergie calorifique entre la première boucle de fluide réfrigérant A et la deuxième boucle de fluide caloporteur Ω. Toute l'énergie calorifique du fluide réfrigérant puisée dans l'air extérieur au véhicule automobile peut être restituée directement au flux d'air intérieur en direction de l'habitacle du véhicule via un échangeur de chaleur 9 dédié.

Selon un premier mode de réalisation illustré à la figure 1, une branche de contournement D est disposée sur la première boucle de fluide réfrigérant A. Dans ce premier mode de réalisation, le fluide réfrigérant pourra alors contourner l'échangeur de chaleur bifluide 13.

Pour cela, le circuit de climatisation réversible indirect 1 comporte un dispositif de redirection du fluide réfrigérant vers l'échangeur de chaleur bifluide 13 ou vers la branche de contournement D.

Selon un deuxième mode de réalisation illustré à la figure 2, une branche de contournement D' est disposée sur la deuxième boucle de fluide caloporteur Ω. Dans ce deuxième mode de réalisation, le fluide caloporteur pourra alors contourner l'échangeur de chaleur bifluide 13.

Pour cela, le circuit de climatisation réversible indirect 1 comporte un dispositif de redirection du fluide caloporteur vers l'échangeur de chaleur bifluide 13 ou vers la branche de contournement D'.

Il est cependant tout à fait possible d'imaginer un mode de réalisation particulier (non représenté) où la première boucle de fluide réfrigérant A et la deuxième boucle de fluide caloporteur Ω comporte toutes deux une branche de contournement D, D'.

Comme le montrent les figures 1 et 2, la première boucle de fluide réfrigérant A comporte
dans le sens de circulation du fluide réfrigérant dans un mode de fonctionnement de climatisation :
   ∘ un compresseur 3,
   ∘ un premier échangeur de chaleur 5 disposé en aval du compresseur 3, ledit premier échangeur de chaleur 5 étant destiné à être traversé par un flux d'air extérieur 100 au véhicule automobile,
   ∘ un premier dispositif de détente 7 disposé en aval du premier échangeur de chaleur 5,
   ∘ un deuxième échangeur de chaleur 9 disposé en aval du premier dispositif de détente 7, ledit deuxième échangeur de chaleur 9 étant destiné à être traversé par un flux d'air intérieur 200 à destination de l'habitacle du véhicule automobile,
ladite première boucle de fluide réfrigérant A peut comporter en outre :
   ∘ une première branche de raccordement B reliant un premier point de jonction 21 et un deuxième point de jonction 22. Le premier point de jonction 21 est disposé en aval du compresseur 3, entre ledit compresseur 3 et le premier échangeur de chaleur 5. Le deuxième point de jonction 22 est quant à lui disposé en aval du deuxième échangeur de chaleur 9 entre ledit deuxième échangeur de chaleur 9 et le compresseur 3, ladite première branche de raccordement B comportant l'échangeur de chaleur bifluide 13, et
   ∘ une deuxième branche de raccordement C reliant un troisième point de jonction 23 et un quatrième point de jonction 24. Le troisième point de jonction 23 est disposé en amont du premier échangeur de chaleur 5, entre le premier point de jonction 21 et ledit premier échangeur de chaleur 5. Le quatrième point de jonction 24 est quant à lui disposé en amont du compresseur 3, entre le deuxième échangeur de chaleur 9 et ledit compresseur 3.

La première boucle de fluide réfrigérant A comporte également un dispositif de redirection du fluide réfrigérant selon les différents modes de fonctionnement. Ce dispositif de redirection du fluide réfrigérant permet notamment :
- la redirection du fluide réfrigérant en provenance du compresseur 3 vers le premier échangeur de chaleur 5 et/ou vers la première branche de raccordement B,
- la redirection du fluide réfrigérant en provenance du premier échangeur de chaleur 5 vers la deuxième branche de contournement C, et
- la redirection du fluide réfrigérant en provenance de l'échangeur de chaleur bifluide 13 vers le deuxième échangeur de chaleur 9.

Comme sur les exemples illustrés sur les différentes figures, ce dispositif de redirection du fluide réfrigérant peut être composé de différentes vannes d'arrêt, notamment :
- une première vanne d'arrêt 31 disposée entre le premier point de jonction 21 et le troisième point de jonction 23. Cette première vanne d'arrêt 21 permet le passage ou le blocage du fluide réfrigérant en provenance du compresseur 3 ou du premier échangeur de chaleur 5,
- une deuxième vanne d'arrêt 32 disposée sur la première branche de raccordement B, par exemple entre le premier point de jonction 21 et l'échangeur de chaleur bifluide 13. Cette deuxième vanne d'arrêt 32 permet le passage ou le blocage du fluide réfrigérant en provenance du compresseur 3 ou du deuxième échangeur de chaleur 9 dans la première branche de raccordement B,
- une troisième vanne d'arrêt 33 disposée sur la deuxième branche de raccordement C. Cette troisième vanne d'arrêt 33 permet le passage ou le blocage du fluide réfrigérant en provenance du premier 5 ou du deuxième 9 échangeur de chaleur dans la deuxième branche de raccordement C,
- une quatrième vanne d'arrêt 34 disposée entre le deuxième point de jonction 22 et le quatrième point de jonction 24, en amont du compresseur 3. Cette quatrième vanne d'arrêt 34 permet le passage ou le blocage du fluide réfrigérant en provenance du deuxième échangeur de chaleur 9, de la première B ou de la deuxième C branche de raccordement.

Il est bien entendu tout à fait possible d'imaginer une organisation différente des vannes d'arrêt ou encore de les remplacer ou combiner avec d'autres éléments tels que des clapets anti-retour ou des vannes trois-voies placées au niveau de points de jonctions.

Par vannes d'arrêts, on entend ici des vannes d'arrêts mécaniques ou électroniques pouvant être pilotées par une unité de commande électronique embarquée dans le véhicule automobile.

Selon le premier mode de réalisation illustré notamment à la figure 1, la branche de contournement D de l'échangeur de chaleur bifluide 13 relie un cinquième point de jonction 25 et un sixième point de jonction 26. Le cinquième point de jonction 25 est ici disposé en amont de l'échangeur de chaleur bifluide 13 sur la première branche de raccordement B. Le sixième point de jonction 26 est quant à lui disposé en aval de l'échangeur de chaleur bifluide 13 sur la première branche de raccordement B.

Dans ce premier mode de réalisation, le dispositif de redirection du fluide réfrigérant vers l'échangeur de chaleur bifluide 13 ou vers la branche de contournement D peut notamment comporter une cinquième vanne d'arrêt 35 disposée sur ladite branche de contournement D. La deuxième vanne d'arrêt 32 est alors disposée sur la première branche de raccordement B entre les cinquième 25 et sixième 26 points de jonctions. Selon cet exemple du premier mode de réalisation, la branche de contournement D ne nécessite qu'une seule cinquième vanne d'arrêt 35 supplémentaire ce qui permet de limiter les coûts de production.

La deuxième boucle de fluide caloporteur Ω comporte dans le sens de circulation du fluide caloporteur :
∘ une pompe 53,
∘ l'échangeur de chaleur bifluide 13
∘ un troisième échangeur de chaleur 51 disposé en aval de l'échangeur de chaleur bifluide 13, ledit troisième échangeur de chaleur 51 étant destiné à être traversé par le flux d'air intérieur 200 et étant disposé en aval du deuxième échangeur de chaleur 9 dans ledit flux d'air intérieur 200.

Selon le deuxième mode de réalisation illustré à la figure 2, la branche de contournement D' de l'échangeur de chaleur bifluide 13 relie un septième point de jonction 27 et un huitième point de jonction 28. Le septième point de jonction 27 est ici disposé en amont de l'échangeur de chaleur bifluide 13 sur la deuxième boucle de fluide caloporteur Ω. Le huitième point de jonction 28 est quant à lui disposé en aval de l'échangeur de chaleur bifluide 13 sur la deuxième boucle de fluide caloporteur Ω.

Dans ce deuxième mode de réalisation, le dispositif de redirection du fluide caloporteur vers l'échangeur de chaleur bifluide 13 ou vers la branche de contournement D' peut notamment comporter une sixième vanne d'arrêt 36 disposée sur ladite branche de contournement D'. La deuxième boucle de fluide caloporteur Ω peut comporter également une septième vanne d'arrêt 37 disposée entre les septième 27 et huitième 28 points de jonctions, en amont ou en aval de l'échangeur de chaleur bifluide 13.

Comme illustré sur les figures 1 et 2, la deuxième boucle de fluide caloporteur Ω peut également comporter un élément électrique chauffant 55 du fluide caloporteur disposé, dans le sens de circulation du fluide caloporteur, en aval de l'échangeur de chaleur bifluide 13, entre ledit échangeur de chaleur bifluide 13 et le troisième échangeur de chaleur 51. Cette élément électrique chauffant 55 permet par exemple un chauffage directe du fluide caloporteur, par exemple pour aider à atteindre la température consigne du flux d'air intérieur 200 par l'intermédiaire du troisième échangeur de chaleur 51.

De même, le circuit de climatisation réversible indirect 1 peut également comporter un accumulateur 11 de fluide réfrigérant en amont du compresseur 3 sur la première boucle de fluide réfrigérant A.

La présente invention concerne également un procédé de fonctionnement du circuit de de climatisation réversible indirect 1 selon différents modes de fonctionnement.

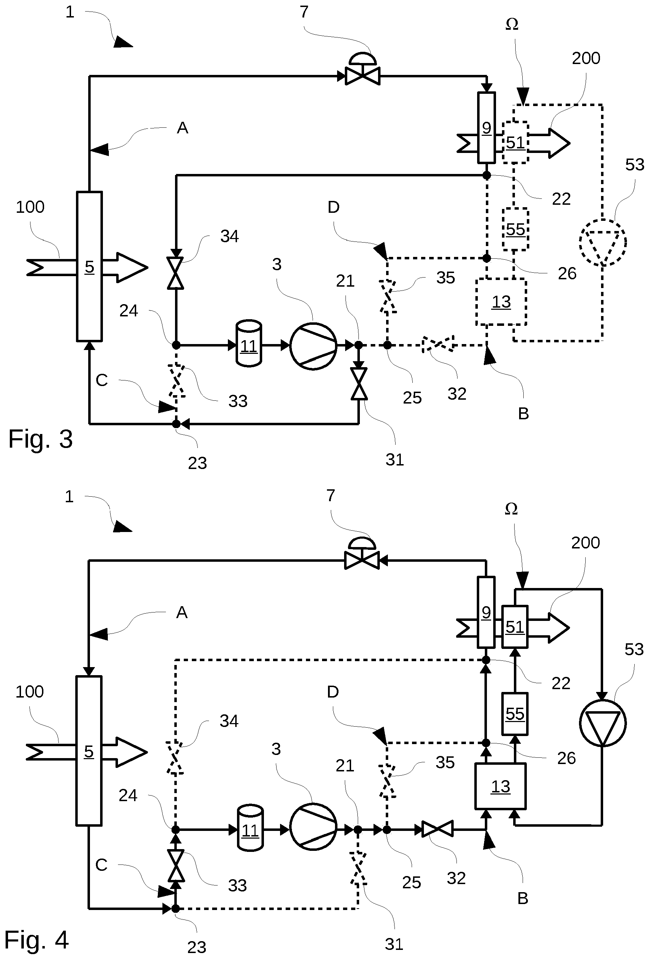

Sur les figures 3 à 9 montrant différents modes de fonctionnement, les éléments où le fluide réfrigérant ou le fluide caloporteur circulent sont représentés en traits pleins et les éléments où ils ne circulent pas sont représentés en traits pointillés. Des flèches ont également été insérées afin de montrer le sens de circulation du fluide réfrigérant ou du fluide caloporteur.

Un premier mode de fonctionnement est illustré à la figure 3, il s'agit d'un mode climatisation où le fluide réfrigérant passe successivement dans :
- le compresseur 3, où le fluide réfrigérant en phase gazeuse subit une augmentation de sa pression,
- le premier point de jonction 21, où le fluide réfrigérant est totalement redirigé vers le troisième point de jonction 23,
- le troisième point de jonction 23, où le fluide réfrigérant est totalement redirigé vers le premier échangeur de chaleur 5,
- le premier échangeur de chaleur 5, où le fluide réfrigérant perd de l'enthalpie en cédant de l'énergie calorifique au flux d'air extérieur 100 et où ledit fluide réfrigérant passe en phase liquide,
- le premier dispositif de détente 7, où le fluide réfrigérant subit une perte de pression,
- le deuxième échangeur de chaleur 9, où le fluide réfrigérant regagne de l'enthalpie en absorbant de l'énergie calorifique au flux d'air intérieur 200 et où ledit fluide réfrigérant passe en phase gazeuse,
- le deuxième point de jonction 22, où le fluide réfrigérant est totalement redirigé vers le quatrième point de jonction 24. Au niveau du quatrième point de jonction 24 le fluide réfrigérant est alors redirigé vers le compresseur 3.

Dans ce mode climatisation, et selon le premier mode de réalisation, le dispositif de redirection du fluide réfrigérant redirige le fluide réfrigérant par exemple en fermant les deuxième 32, troisième 33 et cinquième 35 vannes d'arrêt et en ouvrant les première 31 et quatrième 34 vannes d'arrêt. Selon le deuxième mode de réalisation, le dispositif de redirection du fluide réfrigérant redirige le fluide réfrigérant par exemple en fermant les deuxième 32 et troisième 33 vannes d'arrêt et en ouvrant les première 31 et quatrième 34 vannes d'arrêt.

Dans ce mode climatisation, la deuxième boucle de fluide caloporteur Ω est généralement à l'arrêt. La deuxième boucle de fluide caloporteur Ω peut éventuellement fonctionner afin de réchauffer l'air en sortie du deuxième échangeur de chaleur 9 afin de déshumidifier le flux d'air intérieur 200.

Un deuxième mode de fonctionnement est illustré à la figure 4, il s'agit d'un mode pompe à chaleur où le fluide réfrigérant passe successivement dans :
- le compresseur 3, où le fluide réfrigérant en phase gazeuse subit une augmentation de sa pression,
- le premier point de jonction 21, où le fluide réfrigérant est totalement redirigé vers la première branche de raccordement B,
- le cinquième point de jonction 25, où le fluide réfrigérant est totalement redirigé vers l'échangeur de chaleur bifluide 13,
- l'échangeur de chaleur bifluide 13, où le fluide réfrigérant perd de l'enthalpie en cédant de l'énergie calorifique au fluide caloporteur de la deuxième boucle de fluide caloporteur Ω et où ledit fluide réfrigérant passe en partie phase liquide,
- le sixième point de jonction 26, où le fluide réfrigérant est totalement redirigé vers le deuxième point de jonction 22,
- le sixième point de jonction 26, où le fluide réfrigérant est totalement redirigé vers le deuxième échangeur de chaleur 9,
- le deuxième échangeur de chaleur 9, où le fluide réfrigérant perd de l'enthalpie en cédant de l'énergie calorifique au flux d'air intérieur 200 et où ledit fluide réfrigérant termine de passer en phase liquide,
- le premier dispositif de détente 7, où le fluide réfrigérant subit une perte de pression,
- le premier échangeur de chaleur 5, où le fluide réfrigérant regagne de l'enthalpie en absorbant de l'énergie calorifique au flux d'air extérieur 100 et où ledit fluide réfrigérant passe en phase gazeuse,
- le troisième point de jonction 23, où le fluide réfrigérant est totalement redirigé dans la deuxième branche de raccordement C, vers le quatrième point de jonction 24. Au niveau du quatrième point de jonction 24 le fluide réfrigérant est alors redirigé vers le compresseur 3.

Dans ce mode pompe à chaleur et selon le premier mode de réalisation, le dispositif de redirection du fluide réfrigérant redirige le fluide réfrigérant par exemple en fermant les première 31, quatrième 34 et cinquième 35 vannes d'arrêt et en ouvrant les deuxième 32 et troisième 33 vannes d'arrêt.

Selon le deuxième mode de réalisation, le dispositif de redirection du fluide réfrigérant redirige le fluide réfrigérant par exemple en fermant les première 31, et quatrième 34 vannes d'arrêt et en ouvrant les deuxième 32 et troisième 33 vannes d'arrêt.

Dans ce mode pompe à chaleur, la deuxième boucle de fluide caloporteur Ω est en fonctionnement afin de faire circuler le fluide caloporteur dans l'échangeur de chaleur bifluide 13. Selon le deuxième mode de réalisation, le dispositif de redirection du fluide caloporteur redirige le fluide caloporteur vers l'échangeur de chaleur bifluide 13 par exemple en fermant la sixième vanne d'arrêt 36 et en ouvrant la septième vanne d'arrêt 37.

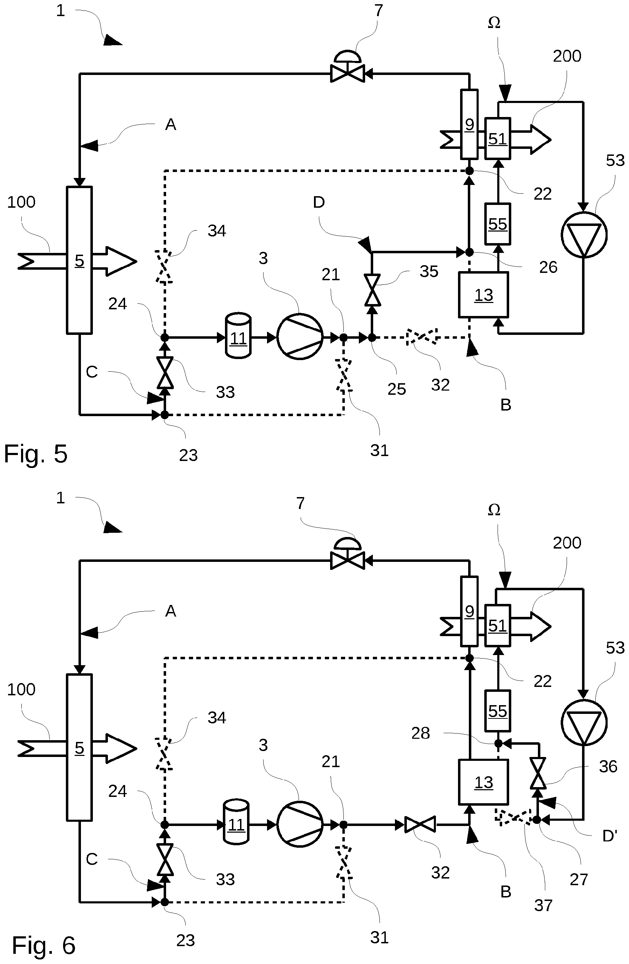

Les figures 5 et 6 montrent une variante du mode pompe à chaleur dans laquelle le fluide réfrigérant et/ou le fluide caloporteur passe par la branche de contournement D ou D' de façon à ne pas circuler dans l'échangeur de chaleur bifluide 13. Cette variante du mode pompe à chaleur est particulièrement utile lorsque la température extérieure est très basse, par exemple de l'ordre de -10°C et que le fluide caloporteur est à haute température. Dans ces conditions, l'échangeur de chaleur bifluide 13 est contourné et il n'y a pas d'échange d'énergie calorifique entre la première boucle de fluide réfrigérant A et la deuxième boucle de fluide caloporteur Ω. Toute l'énergie calorifique du fluide réfrigérant puisée dans l'air extérieur au véhicule automobile peut être restituée directement au flux d'air intérieur 200 via le deuxième échangeur de chaleur 9.

La figure 5 montre cette variante du mode pompe à chaleur selon le premier mode de réalisation. Le fluide réfrigérant circule alors successivement dans :
- le compresseur 3, où le fluide réfrigérant en phase gazeuse subit une augmentation de sa pression,
- le premier point de jonction 21, où le fluide réfrigérant est totalement redirigé vers la première branche de raccordement B,
- le cinquième point de jonction 25, où le fluide réfrigérant est totalement redirigé vers la branche de contournement D,
- le sixième point de jonction 26, où le fluide réfrigérant est totalement redirigé vers le deuxième point de jonction 22,
- le deuxième point de jonction 22, où le fluide réfrigérant est totalement redirigé vers le deuxième échangeur de chaleur 9,
- le deuxième échangeur de chaleur 9, où le fluide réfrigérant perd de l'enthalpie en cédant de l'énergie calorifique au flux d'air intérieur 200 et où ledit fluide réfrigérant passe en phase liquide,
- le premier dispositif de détente 7, où le fluide réfrigérant subit une perte de pression,
- le premier échangeur de chaleur 5, où le fluide réfrigérant regagne de l'enthalpie en absorbant de l'énergie calorifique au flux d'air extérieur 100 et où ledit fluide réfrigérant passe en phase gazeuse,
- le troisième point de jonction 23, où le fluide réfrigérant est totalement redirigé dans la deuxième branche de raccordement C, vers le quatrième point de jonction 24. Au niveau du quatrième point de jonction 24 le fluide réfrigérant est alors redirigé vers le compresseur 3.

Dans cette variante du mode pompe à chaleur selon le premier mode de réalisation, le dispositif de redirection du fluide réfrigérant redirige le fluide réfrigérant par exemple en fermant les première 31, deuxième 32 et quatrième 34 vannes d'arrêt et en ouvrant les troisième 33 et cinquième 35 vannes d'arrêt. Dans cette variante du mode pompe à chaleur, la deuxième boucle de fluide caloporteur Ω est en fonctionnement afin de faire circuler le fluide caloporteur dans l'échangeur de chaleur bifluide 13.

La figure 6 montre cette variante du mode pompe à chaleur selon le deuxième mode de réalisation. Le fluide réfrigérant circule alors successivement dans :
- le compresseur 3, où le fluide réfrigérant en phase gazeuse subit une augmentation de sa pression,
- le premier point de jonction 21, où le fluide réfrigérant est totalement redirigé vers la première branche de raccordement B,
- l'échangeur de chaleur bifluide 13, que le fluide réfrigérant ne fait que traverser sans échanger d'énergie calorifique avec le fluide caloporteur car dans la deuxième boucle de fluide caloporteur Ω, ledit fluide caloporteur circule dans la branche de contournement D',
- le deuxième échangeur de chaleur 9, où le fluide réfrigérant perd de l'enthalpie en cédant de l'énergie calorifique au flux d'air intérieur 200 et où ledit fluide réfrigérant passe en phase liquide,
- le premier dispositif de détente 7, où le fluide réfrigérant subit une perte de pression,
- le premier échangeur de chaleur 5, où le fluide réfrigérant regagne de l'enthalpie en absorbant de l'énergie calorifique au flux d'air extérieur 100 et où ledit fluide réfrigérant passe en phase gazeuse,
- le troisième point de jonction 23, où le fluide réfrigérant est totalement redirigé dans la deuxième branche de raccordement C, vers le quatrième point de jonction 24. Au niveau du quatrième point de jonction 24 le fluide réfrigérant est alors redirigé vers le compresseur 3.

Dans cette variante du mode pompe à chaleur selon le deuxième mode de réalisation, le dispositif de redirection du fluide réfrigérant redirige le fluide réfrigérant par exemple en fermant les première 31, et quatrième 34 vannes d'arrêt et en ouvrant les deuxième 31 et troisième 33 vannes d'arrêt. Au niveau du dispositif de redirection du fluide caloporteur, ce dernier redirige le fluide caloporteur dans la branche de contournement D' par exemple en ouvrant la sixième vanne d'arrêt 36 et en fermant la septième vanne d'arrêt 37.

Toujours pour cette variante du mode pompe à chaleur, la deuxième boucle de fluide caloporteur Ω peut être en fonctionnement, notamment pour effectuer un chauffage supplémentaire du flux d'air intérieur 200 au moyen de l'élément électrique chauffant 55 et du troisième échangeur de chaleur 51.

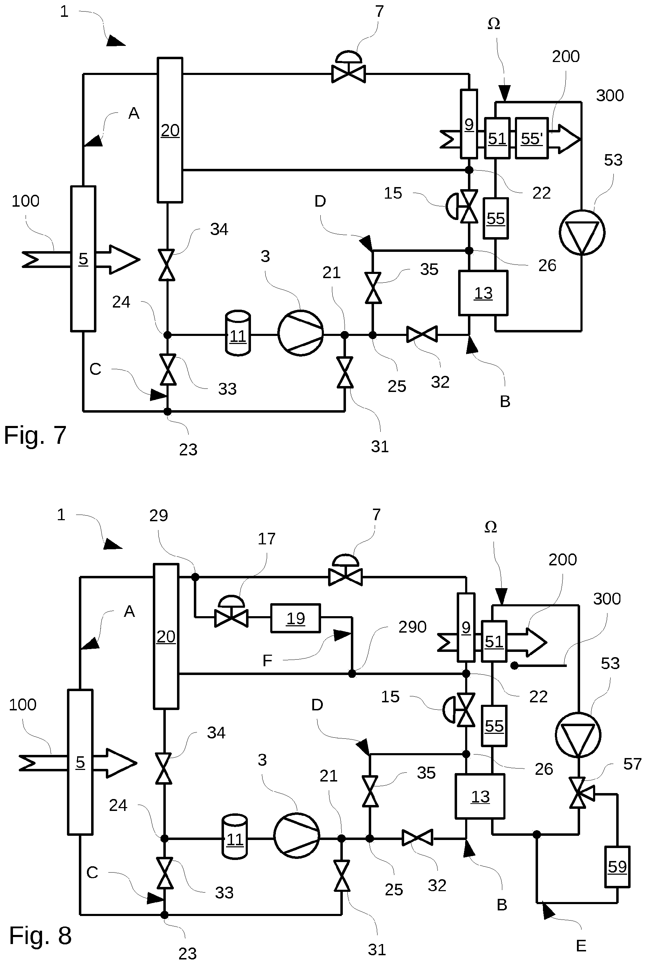

Comme le montrent les figures 7 et 8, le circuit de climatisation réversible indirect 1 peut comporter d'autres éléments.

La première boucle de fluide réfrigérant A peut notamment comporter un échangeur de chaleur interne 20 (connu également sous l'acronyme IHX pour « internai heat exchanger » en anglais) qui permet un échange de chaleur entre le fluide réfrigérant en sortie du premier échangeur de chaleur 5 avec le fluide réfrigérant en sortie du deuxième échangeur de chaleur 9. Ledit échangeur de chaleur interne 20 est alors raccordé à la sortie de fluide réfrigérant du premier échangeur de chaleur 5, entre ledit premier échangeur de chaleur 5 et le premier dispositif de détente 7, et raccordé à la sortie de fluide réfrigérant du deuxième échangeur de chaleur 9, entre les deuxième 22 et quatrième 24 points de jonctions. Cet échangeur de chaleur interne 20 permet notamment une amélioration du coefficient de performance du circuit de climatisation réversible indirect 1.

La première branche de raccordement B peut quant à elle comporter un deuxième dispositif de détente 15 disposé en aval de l'échangeur de chaleur bifluide 13, dans le sens de circulation du fluide réfrigérant au sein de ladite première branche de raccordement B. Ce deuxième dispositif de détente 15 peut plus particulièrement être apte à être complètement ouvert afin de laisser passer le fluide réfrigérant sans perte de pression. Une solution alternative peut être un contournement dudit deuxième dispositif de détente 15 afin de laisser passer le fluide réfrigérant sans qu'il perde de pression. Ce deuxième dispositif de détente 15 peut être notamment utile pour faire subir une perte de pression au fluide réfrigérant en mode pompe à chaleur avant qu'il ne passe dans le deuxième échangeur de chaleur 9. Le deuxième échangeur de chaleur 9 va alors permettre une déshumidification du flux d'air intérieur 200.

Comme le montre la figure 7, le circuit de climatisation réversible indirect 1 peut également comporter, en supplément de l'élément électrique chauffant 55 chauffant le fluide caloporteur, un élément électrique chauffant d'air 55' disposé en aval du deuxième échangeur de chaleur 9 dans le flux d'air intérieur 200. Cet élément électrique chauffant d'air 55' permet de réchauffer directement le flux d'air interne 200.

Comme illustré à la figure 8, la première boucle de fluide réfrigérant A peut comporter une branche de dérivation F disposée en parallèle du premier dispositif de détente 7 et du deuxième échangeur de chaleur 9. Cette branche de dérivation F relie plus précisément un neuvième point de jonction 29 et un dixième point de jonction 290. Le neuvième point de jonction 29 est disposé entre le premier échangeur de chaleur 5 et le premier dispositif de détente 7, et le dixième point de jonction 290 est disposé entre le deuxième échangeur de chaleur 9 et le compresseur 3. Cette branche de dérivation F comprend notamment un troisième dispositif de détente 17 et un quatrième échangeur de chaleur 19 disposé en aval dudit troisième dispositif de détente 17. Ce quatrième échangeur de chaleur 19 peut par exemple servir en mode climatisation pour refroidir certains éléments du véhicule automobile comme par exemples des composants électriques ou des batteries.

Comme illustré à la figure 8, la deuxième boucle de fluide caloporteur Ω peut comporter un cinquième échangeur de chaleur 59 connecté en parallèle à ladite deuxième boucle de fluide caloporteur Ω. Afin de rediriger totalement ou partiellement le fluide caloporteur vers ledit cinquième échangeur de chaleur 59 ou non, la deuxième boucle de fluide caloporteur Ω peut comporter par exemple une vanne trois-voies 57 ou alors diverses vannes d'arrêt. Ce cinquième échangeur de chaleur peut notamment être relié à un système de gestion thermique du moteur du véhicule automobile. Cela permet notamment d'utiliser une partie de l'énergie calorifique générée au niveau de ce cinquième échangeur de chaleur 59 et de la transférer au flux d'air intérieur 200 pour le réchauffer via le troisième échangeur de chaleur 51.

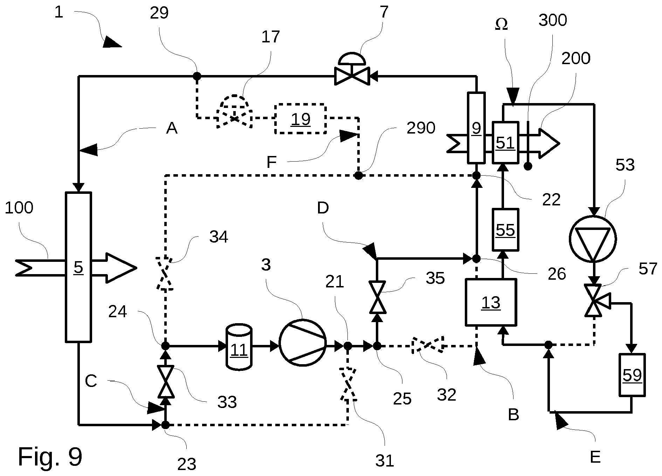

Comme le montre la figure 9, la branche de contournement D, D' peut également avoir une utilité, toujours en mode pompe à chaleur, mais lors d'un démarrage à froid avec une température de fluide caloporteur basse.

Dans ce cas de figure, le fluide réfrigérant et/ou le fluide caloporteur contourne l'échangeur de chaleur bifluide 13 en passant par une branche de contournement D et/ou D'. Le fluide caloporteur passe dans le cinquième échangeur de chaleur 59 et, afin de monter en température, est réchauffé par l'élément électrique chauffant 55. Pour éviter que de l'énergie calorifique du fluide caloporteur ne se dissipe dans le flux d'air intérieur 200, un clapet 300 peut être fermé de façon à empêcher le flux d'air intérieur 200 de circuler au travers du troisième échangeur de chaleur 51. Cela permet une accélération de la montée en température du fluide caloporteur et donc par exemple une accélération de la montée en température du moteur.

La première boucle de fluide réfrigérant A fonctionne en mode pompe à chaleur, comme précédemment, et permet dans ce cas de figure un réchauffement du flux d'air intérieur 200 au niveau du deuxième échangeur de chaleur 9.

Ainsi, on voit bien que le circuit de climatisation réversible indirect 1 selon l'invention permet un fonctionnement en mode pompe à chaleur, même avec des températures d'air extérieure très basses, par exemple inférieures ou égales à -10°C du fait de la possibilité de contournement de l'échangeur de chaleur bifluide 13 via la branche de contournement D.

## Revendications

1. Circuit de climatisation réversible indirect (1) pour véhicule automobile comportant :
• une première boucle de fluide réfrigérant (A) dans laquelle circule un fluide réfrigérant,
• une deuxième boucle de fluide caloporteur (Ω) dans laquelle circule un fluide caloporteur, et
• un échangeur de chaleur bifluide (13) agencé conjointement sur la première boucle de fluide réfrigérant (A) et la deuxième boucle de fluide caloporteur (Ω), de façon à permettre les échanges de chaleur entre la première boucle de fluide réfrigérant (A) et la deuxième boucle de fluide caloporteur (Ω),
• au moins une des première boucle de fluide réfrigérant (A) et deuxième boucle de fluide caloporteur (Ω) du circuit de climatisation réversible (1) comporte une branche de contournement (D, D') de l'échangeur de chaleur bifluide (13)
**caractérisé en ce que** la première boucle de fluide réfrigérant (A) comporte dans le sens de circulation du fluide réfrigérant dans un mode de fonctionnement de climatisation :
∘ un compresseur (3),
∘ un premier échangeur de chaleur (5) disposé en aval du compresseur (3), ledit premier échangeur de chaleur (5) étant destiné à être traversé par un flux d'air extérieur (100) au véhicule automobile,
∘ un premier dispositif de détente (7) disposé en aval du premier échangeur de chaleur (5),
∘ un deuxième échangeur de chaleur (9) disposé en aval du premier dispositif de détente (7), ledit deuxième échangeur de chaleur (9) étant destiné à être traversé par un flux d'air intérieur (200) à destination de l'habitacle du véhicule automobile,
ladite première boucle de fluide réfrigérant (A) comportant en outre :
∘ une première branche de raccordement (B) reliant un premier point de jonction (21) et un deuxième point de jonction (22), ledit premier point de jonction étant disposé en aval du compresseur (3), entre ledit compresseur (3) et le premier échangeur de chaleur (5) et ledit deuxième point de jonction (22) étant disposé en aval du deuxième échangeur de chaleur (9), entre ledit deuxième échangeur de chaleur (9) et le compresseur (3), ladite première branche de raccordement (B) comportant l'échangeur de chaleur bifluide (13), et
une deuxième branche de raccordement (C) reliant un troisième point de jonction (23) et un quatrième point de jonction (24), ledit troisième point de jonction étant disposé en amont du premier échangeur de chaleur (5), entre le premier point de jonction (21) et ledit premier échangeur de chaleur (5), et ledit quatrième point de jonction (24) étant disposé en amont du compresseur (3), entre le deuxième échangeur de chaleur (9) et ledit compresseur (3).

2. Circuit de climatisation réversible indirect (1) selon la revendication 1, **caractérisé en ce qu'**une branche de contournement (D) est disposée sur la première boucle de fluide réfrigérant (A).

3. Circuit de climatisation réversible indirect (1) selon la revendication précédente, **caractérisé en ce qu'**il comporte un dispositif de redirection du fluide réfrigérant vers l'échangeur de chaleur bifluide (13) ou vers la branche de contournement (D).

4. Circuit de climatisation réversible indirect (1) selon l'une des revendications précédentes, **caractérisé en ce qu'**une branche de contournement (D') est disposée sur la deuxième boucle de fluide caloporteur (Ω).

5. Circuit de climatisation réversible indirect (1) selon la revendication précédente, **caractérisé en ce qu'**il comporte un dispositif de redirection du fluide caloporteur vers l'échangeur de chaleur bifluide (13) ou vers la branche de contournement (D').

6. Circuit de climatisation réversible indirect (1) selon l'une des revendications 2 à 5 en combinaison, **caractérisé en ce que** la branche de contournement (D) de l'échangeur de chaleur bifluide (13) relie un cinquième point de jonction (25) et un sixième point de jonction (26), ledit cinquième point de jonction (25) étant disposé en amont de l'échangeur de chaleur bifluide (13) sur la première branche de raccordement (B) et ledit sixième point de jonction (26) étant disposé en aval de l'échangeur de chaleur bifluide (13) sur la première branche de raccordement (B).

7. Circuit de climatisation réversible indirect (1) selon l'une des revendications précédentes, **caractérisé en ce que** la deuxième boucle de fluide caloporteur (Ω) comporte dans le sens de circulation du fluide caloporteur :
∘ une pompe (53),
∘ l'échangeur de chaleur bifluide (13),
∘ un troisième échangeur de chaleur (51) disposé en aval de l'échangeur de chaleur bifluide (13), ledit troisième échangeur de chaleur (51) étant destiné à être traversé par le flux d'air intérieur (200) et étant disposé en aval du deuxième échangeur de chaleur (9) dans ledit flux d'air intérieur (200).

8. Circuit de climatisation réversible indirect (1) selon les revendications 4 et 7 en combinaison, **caractérisé en ce que** la branche de contournement (D') de l'échangeur de chaleur bifluide (13) relie un septième point de jonction (27) et un huitième point de jonction (28), ledit septième point de jonction (27) étant disposé en amont de l'échangeur de chaleur bifluide (13) sur la deuxième boucle de fluide caloporteur (Ω) et ledit huitième point de jonction (28) étant disposé en aval de l'échangeur de chaleur bifluide (13) sur la deuxième boucle de fluide caloporteur (Ω).

9. Circuit de climatisation réversible indirect (1) selon l'une des revendications 7 ou 8 **caractérisé en ce que** la deuxième boucle de fluide caloporteur (Ω) comporte un élément électrique chauffant (55) du fluide caloporteur disposé, dans le sens de circulation du fluide caloporteur, en aval de l'échangeur de chaleur bifluide (13), entre ledit échangeur de chaleur bifluide (13) et le troisième échangeur de chaleur (51).

10. Circuit de climatisation réversible indirect (1) selon l'une des revendications précédentes, **caractérisé en ce que** la première branche de raccordement (B) comporte un deuxième dispositif de détente (15) disposé en aval de l'échangeur de chaleur bifluide (13), dans le sens de circulation du fluide réfrigérant au sein de ladite première branche de raccordement (B).

11. Circuit de climatisation réversible indirect (1) selon l'une des revendications précédentes, **caractérisé en ce que** la première boucle de fluide réfrigérant (A) comporte une branche de dérivation (F) reliant un neuvième point de jonction (29), disposé entre le premier échangeur de chaleur (5) et le premier dispositif de détente (7), et un dixième point de jonction (290) disposé entre le deuxième échangeur de chaleur (9) et le compresseur (3), ladite branche de dérivation (F) comprenant un troisième dispositif de détente (17) et un quatrième échangeur de chaleur (19) disposé en aval dudit troisième dispositif de détente (17).

12. Circuit de climatisation réversible indirect (1) selon l'une des revendications précédentes, **caractérisé en ce que** la deuxième boucle de fluide caloporteur (Ω) comporte un cinquième échangeur de chaleur (59) connecté en parallèle à ladite deuxième boucle de fluide caloporteur (Ω).

13. Procédé de fonctionnement d'un circuit de climatisation réversible indirect (1) selon l'une des revendications précédentes, selon un mode de fonctionnement pompe à chaleur dans lequel le fluide réfrigérant et/ou le fluide caloporteur passe par la branche de contournement (D) de façon à ne pas circuler dans l'échangeur de chaleur bifluide (13).

## Patentansprüche

1. Indirekter reversibler Klimatisierungskreislauf (1) für ein Kraftfahrzeug, umfassend:
• eine erste Kältemittelschleife (A), in der ein Kältemittel zirkuliert,
• eine zweite Wärmeträgerfluidschleife (Ω), in der ein Wärmeträgerfluid zirkuliert, und
• einen Zweifluid-Wärmetauscher (13), der gleichzeitig in der ersten Kältemittelschleife (A) und der zweiten Wärmeträgerfluidschleife (Ω) angeordnet ist, so dass er die Wärmeaustauschvorgänge zwischen der ersten Kältemittelschleife (A) und der zweiten Wärmeträgerfluidschleife (Ω) ermöglicht,
• wobei die erste Kältemittelschleife (A) und/oder die zweite Wärmeträgerfluidschleife (Ω) des reversiblen Klimatisierungskreislaufs (1) einen Umgehungszweig (D, D') um den Zweifluid-Wärmetauscher (13) aufweisen,
**dadurch gekennzeichnet, dass** die erste Kältemittelschleife (A) in der Strömungsrichtung des Kältemittels in einer Klimatisierungsbetriebsart umfasst:
∘ einen Kompressor (3),
∘ einen ersten Wärmetauscher (5), der stromabwärts des Kompressors (3) angeordnet ist, wobei der erste Wärmetauscher (5) dazu bestimmt ist, von einem Außenluftstrom (100) des Kraftfahrzeugs durchströmt zu werden,
∘ eine erste Expansionsvorrichtung (7), die stromabwärts des ersten Wärmetauschers (5) angeordnet ist,
∘ einen zweiten Wärmetauscher (9), der stromabwärts der ersten Expansionsvorrichtung (7) angeordnet ist, wobei der zweite Wärmetauscher (9) dazu bestimmt ist, von einem Innenluftstrom (200) durchströmt zu werden, der zum Innenraum des Kraftfahrzeugs strömt,
wobei die erste Kältemittelschleife (A) außerdem umfasst:
∘ einen ersten Anschlusszweig (B), der einen ersten Verbindungspunkt (21) und einen zweiten Verbindungspunkt (22) verbindet, wobei der erste Verbindungspunkt stromabwärts des Kompressors (3) angeordnet ist, zwischen dem Kompressor (3) und dem ersten Wärmetauscher (5), und wobei der zweite Verbindungspunkt (22) stromabwärts des zweiten Wärmetauschers (9) angeordnet ist, zwischen dem zweiten Wärmetauscher (9) und dem Kompressor (3), wobei der erste Anschlusszweig (B) den Zweifluid-Wärmetauscher (13) umfasst, und
∘ einen zweiten Anschlusszweig (C), der einen dritten Verbindungspunkt (23) und einen vierten Verbindungspunkt (24) verbindet, wobei der dritte Verbindungspunkt stromaufwärts des ersten Wärmetauschers (5) angeordnet ist, zwischen dem ersten Verbindungspunkt (21) und dem ersten Wärmetauscher (5), und wobei der vierte Verbindungspunkt (24) stromaufwärts des Kompressors (3) angeordnet ist, zwischen dem zweiten Wärmetauscher (9) und dem Kompressor (3).

2. Indirekter reversibler Klimatisierungskreislauf (1) nach Anspruch 1, **dadurch gekennzeichnet, dass** ein Umgehungszweig (D) an der ersten Kältemittelschleife (A) angeordnet ist.

3. Indirekter reversibler Klimatisierungskreislauf (1) nach dem vorhergehenden Anspruch, **dadurch gekennzeichnet, dass** er eine Vorrichtung zur Umleitung des Kältemittels zum Zweifluid-Wärmetauscher (13) oder zum Umgehungszweig (D) aufweist.

4. Indirekter reversibler Klimatisierungskreislauf (1) nach einem der vorhergehenden Ansprüche, **dadurch gekennzeichnet, dass** ein Umgehungszweig (D') an der zweiten Wärmeträgerfluidschleife (Ω) angeordnet ist.

5. Indirekter reversibler Klimatisierungskreislauf (1) nach dem vorhergehenden Anspruch, **dadurch gekennzeichnet, dass** er eine Vorrichtung zur Umleitung des Wärmeträgerfluids zum Zweifluid-Wärmetauscher (13) oder zum Umgehungszweig (D') aufweist.

6. Indirekter reversibler Klimatisierungskreislauf (1) nach einem der Ansprüche 2 bis 5 in Kombination, **dadurch gekennzeichnet, dass** der Umgehungszweig (D) um den Zweifluid-Wärmetauscher (13) einen fünften Verbindungspunkt (25) und einen sechsten Verbindungspunkt (26) verbindet, wobei der fünfte Verbindungspunkt (25) stromaufwärts des Zweifluid-Wärmetauschers (13) im ersten Anschlusszweig (B) angeordnet ist und der sechste Verbindungspunkt (26) stromabwärts des Zweifluid-Wärmetauschers (13) im ersten Anschlusszweig (B) angeordnet ist.

7. Indirekter reversibler Klimatisierungskreislauf (1) nach einem der vorhergehenden Ansprüche, **dadurch gekennzeichnet, dass** die zweite Wärmeträgerfluidschleife (Ω) in der Strömungsrichtung des Wärmeträgerfluids umfasst:
∘ eine Pumpe (53),
∘ den Zweifluid-Wärmetauscher (13),
∘ einen dritten Wärmetauscher (51), der stromabwärts des Zweifluid-Wärmetauschers (13) angeordnet ist, wobei der dritte Wärmetauscher (51) dazu bestimmt ist, von dem Innenluftstrom (200) durchströmt zu werden, und stromabwärts des zweiten Wärmetauschers (9) in dem Innenluftstrom (200) angeordnet ist.

8. Indirekter reversibler Klimatisierungskreislauf (1) nach den Ansprüchen 4 und 7 in Kombination, **dadurch gekennzeichnet, dass** der Umgehungszweig (D') um den Zweifluid-Wärmetauscher (13) einen siebenten Verbindungspunkt (27) und einen achten Verbindungspunkt (28) verbindet, wobei der siebente Verbindungspunkt (27) stromaufwärts des Zweifluid-Wärmetauschers (13) in der zweiten Wärmeträgerfluidschleife (Ω) angeordnet ist und der achte Verbindungspunkt (28) stromabwärts des Zweifluid-Wärmetauschers (13) in der zweiten Wärmeträgerfluidschleife (Ω) angeordnet ist.

9. Indirekter reversibler Klimatisierungskreislauf (1) nach einem der Ansprüche 7 oder 8, **dadurch gekennzeichnet, dass** die zweite Wärmeträgerfluidschleife (Ω) ein elektrisches Heizelement (55) für das Wärmeträgerfluid umfasst, das in der Strömungsrichtung des Wärmeträgerfluids stromabwärts des Zweifluid-Wärmetauschers (13) zwischen dem Zweifluid-Wärmetauscher (13) und dem dritten Wärmetauscher (51) angeordnet ist.

10. Indirekter reversibler Klimatisierungskreislauf (1) nach einem der vorhergehenden Ansprüche, **dadurch gekennzeichnet, dass** der erste Anschlusszweig (B) eine zweite Expansionsvorrichtung (15) umfasst, die stromabwärts des Zweifluid-Wärmetauschers (13) angeordnet ist, in der Strömungsrichtung des Kältemittels innerhalb des ersten Anschlusszweigs (B).

11. Indirekter reversibler Klimatisierungskreislauf (1) nach einem der vorhergehenden Ansprüche, **dadurch gekennzeichnet, dass** die erste Kältemittelschleife (A) einen Umleitungszweig (F) aufweist, der einen neunten Verbindungspunkt (29), der zwischen dem ersten Wärmetauscher (5) und der ersten Expansionsvorrichtung (7) angeordnet ist, und einen zehnten Verbindungspunkt (290), der zwischen dem zweiten Wärmetauscher (9) und dem Kompressor (3) angeordnet ist, verbindet, wobei der Umleitungszweig (F) eine dritte Expansionsvorrichtung (17) und einen vierten Wärmetauscher (19), der stromabwärts der dritten Expansionsvorrichtung (17) angeordnet ist, umfasst.

12. Indirekter reversibler Klimatisierungskreislauf (1) nach einem der vorhergehenden Ansprüche, **dadurch gekennzeichnet, dass** die zweite Wärmeträgerfluidschleife (Ω) einen fünften Wärmetauscher (59) aufweist, der zu der zweiten Wärmeträgerfluidschleife (Ω) parallelgeschaltet ist.

13. Verfahren zum Betrieb eines indirekten reversiblen Klimatisierungskreislaufs (1) nach einem der vorhergehenden Ansprüche gemäß einer Wärmepumpenbetriebsart, in welcher das Kältemittel und/oder das Wärmeträgerfluid durch den Umgehungszweig (D) strömt, so dass es nicht durch den Zweifluid-Wärmetauscher (13) strömt.

## Claims

1. Indirect reversible air-conditioning circuit (1) for a motor vehicle comprising:
• a first refrigerant loop (A) in which a refrigerant circulates,
• a second heat-transfer fluid loop (Ω) in which a heat-transfer fluid circulates, and
• a dual-fluid heat exchanger (13) arranged jointly on the first refrigerant loop (A) and the second heat-transfer fluid loop (Ω), so as to allow exchanges of heat between the first refrigerant loop (A) and the second heat-transfer fluid loop (Ω),
• at least one of the first refrigerant loop (A) and second heat-transfer fluid loop (Ω) of the reversible air-conditioning circuit (1) includes a bypass branch (D, D') for bypassing the dual-fluid heat exchanger (13),
**characterized in that** the first refrigerant loop (A) comprises, in the direction of circulation of the refrigerant in an air-conditioning mode of operation:
∘ a compressor (3),
∘ a first heat exchanger (5) arranged downstream of the compressor (3), said first heat exchanger (5) being intended to be passed through by an air flow (100) outside the motor vehicle,
∘ a first expansion device (7) arranged downstream of the first heat exchanger (5),
∘ a second heat exchanger (9) arranged downstream of the first expansion device (7), said second heat exchanger (9) being intended to be passed through by an inside air flow (200) to the interior of the motor vehicle,
said first refrigerant loop (A) also comprising:
∘ a first connecting branch (B) linking a first junction point (21) and a second junction point (22), said first junction point being arranged downstream of the compressor (3), between said compressor (3) and the first heat exchanger (5) and said second junction point (22) being arranged downstream of the second heat exchanger (9), between said second heat exchanger (9) and the compressor (3), said first connecting branch (B) including the dual-fluid heat exchanger (13), and
∘ a second connecting branch (C) linking a third junction point (23) and a fourth junction point (24), said third junction point being arranged upstream of the first heat exchanger (5), between the first junction point (21) and said first heat exchanger (5), and said fourth junction point (24) being arranged upstream of the compressor (3), between the second heat exchanger (9) and said compressor (3).

2. Indirect reversible air-conditioning circuit (1) according to Claim 1, **characterized in that** a bypass branch (D) is arranged on the first refrigerant loop (A) .

3. Indirect reversible air-conditioning circuit (1) according to the preceding claim, **characterized in that** it comprises a device for redirecting the refrigerant to the dual-fluid heat exchanger (13) or to the bypass branch (D).

4. Indirect reversible air-conditioning circuit (1) according to one of the preceding claims, **characterized in that** a bypass branch (D') is arranged on the second heat-transfer fluid loop (Ω).

5. Indirect reversible air-conditioning circuit (1) according to the preceding claim, **characterized in that** it comprises a device for redirecting the heat-transfer fluid to the dual-fluid heat exchanger (13) or to the bypass branch (D').

6. Indirect reversible air-conditioning circuit (1) according to one of Claims 2 to 5 combined, **characterized in that** the bypass branch (D) bypassing the dual-fluid heat exchanger (13) links a fifth junction point (25) and a sixth junction point (26), said fifth junction point (25) being arranged upstream of the dual-fluid heat exchanger (13) on the first connecting branch (B) and said sixth junction point (26) being arranged downstream of the dual-fluid heat exchanger (13) on the first connecting branch (B).

7. Indirect reversible air-conditioning circuit (1) according to one of the preceding claims, **characterized in that** the second heat-transfer fluid loop (Ω) comprises, in the direction of circulation of the heat-transfer fluid:
∘ a pump (53),
∘ the dual-fluid heat exchanger (13),
∘ a third heat exchanger (51) arranged downstream of the dual-fluid heat exchanger (13), said third heat exchanger (51) being intended to be passed through by the inside air flow (200) and being arranged downstream of the second heat exchanger (9) in said inside air flow (200).

8. Indirect reversible air-conditioning circuit (1) according to Claims 4 and 7 combined, **characterized in that** the bypass branch (D') bypassing the dual-fluid heat exchanger (13) links a seventh junction point (27) and an eighth junction point (28), said seventh junction point (27) being arranged upstream of the dual-fluid heat exchanger (13) on the second heat-transfer fluid loop (Ω) and said eighth junction point (28) being arranged downstream of the dual-fluid heat exchanger (13) on the second heat-transfer fluid loop (Ω).

9. Indirect reversible air-conditioning circuit (1) according to either of Claims 7 and 8, **characterized in that** the second heat-transfer fluid loop (Ω) comprises an electric heating element (55) for heating the heat-transfer fluid arranged, in the direction of circulation of the heat-transfer fluid, downstream of the dual-fluid heat exchanger (13), between said dual-fluid heat exchanger (13) and the third heat exchanger (51) .

10. Indirect reversible air-conditioning circuit (1) according to one of the preceding claims, **characterized in that** the first connecting branch (B) comprises a second expansion device (15) arranged downstream of the dual-fluid heat exchanger (13), in the direction of circulation of the refrigerant within said first connecting branch (B).

11. Indirect reversible air-conditioning circuit (1) according to one of the preceding claims, **characterized in that** the first refrigerant loop (A) comprises a diversion branch (F) linking a ninth junction point (29), arranged between the first heat exchanger (5) and the first expansion device (7), and a tenth junction point (290) arranged between the second heat exchanger (9) and the compressor (3), said diversion branch (F) comprising a third expansion device (17) and a fourth heat exchanger (19) arranged downstream of said third expansion device (17).

12. Indirect reversible air-conditioning circuit (1) according to one of the preceding claims, **characterized in that** the second heat-transfer fluid loop (Ω) comprises a fifth heat exchanger (59) connected in parallel to said second heat-transfer fluid loop (Ω).

13. Method for operating an indirect reversible air-conditioning circuit (1) according to one of the preceding claims, according to a heat-pump mode of operation in which the refrigerant and/or the heat-transfer fluid pass/passes through the bypass branch (D) so as not to circulate in the dual-fluid heat exchanger (13).
